# EUROPÄISCHE PATENTSCHRIFT

(11) **EP 0 378 087 B1**
(45) Veröffentlichungstag und Bekanntmachung des Hinweises auf die Patenterteilung: **24.08.1994**
(21) Anmeldenummer: 90100072.9
(22) Anmeldetag: 03.01.1990
(51) Int. Cl.: H04B 10/24

(54) **Optisches Breitband-Nachrichtenübertragungssystem, insbesondere für den Teilnehmeranschlussbereich**
Wideband optical transmission system, especially for the subscriber region
Système de transmission optique à large bande, en particulier dans la zone d'abonné

(30) Priorität: 07.01.1989 DE 3900362
(43) Veröffentlichungstag der Anmeldung: 18.07.1990
(73) Patentinhaber: Alcatel SEL Aktiengesellschaft, D-70435 Stuttgart (DE)
(72) Erfinder: Küppers, Dieter, Dr., D-8000 München 19 (DE)
(74) Vertreter: Kugler, Hermann, Dipl.-Phys.

(56) Entgegenhaltungen:
- EP-A- 0 286 350
- DE-A- 2 409 455
- DE-A- 3 010 802
- ELECTRONICS LETTERS, Band 21, Heft 22, Oktober 1985, Seiten 1042-1043, Stevenage, GB; N. SHIBATA et al.: "Bending loss measurement of LP11 mode inquasi-single-mode operation region"

## Beschreibung

Die vorliegende Erfindung bezieht sich auf ein optisches Nachrichtenübertragungssystem, insbesondere für den Teilnehmeranschlußbereich, nach dem Oberbegriff des Anspruchs 1.

Ein derartiges System ist bekannt aus der EP-A-265 918 (Fig. 4). Dort erfolgt eine bidirektionale Übertragung derart, daß an einer Stelle im Lichtwellenleiter ein Modenkoppler angeordnet ist, der die Eigenschaft hat, das im Grundmodus LP01 geführte optische Signal in den nächst höheren Modus LP11 in beiden Übertragungsrichtungen umzuwandeln. Während beide optischen Sender das Signal im Grundmodus LP01 aussenden, empfangen beide optischen Empfänger unter Zwischenschaltung jeweils eines Modenfilters nur den nächst höheren Modus LP11, da das Modenfilter nur diesen nächst höheren Modus LP11 zum optischen Empfänger hin aus dem Lichtwellenleiter auskoppelt. Dieses bidirektionale Übertragungssystem hat zwar zu einer Kostenreduzierung derartiger Übertragungssysteme geführt, da jeweils identische optische Sender und Empfänger und ein Standard-1300nm-Lichtwellenleiter verwendet werden können, jedoch ist auch dieses optische Breitband-Nachrichtenübertragungssystem hinsichtlich der Kosten noch nicht optimiert, so daß es insbesondere für den Teilnehmeranschlußbereich doch noch einen nicht akzeptablen Kostenfaktor darstellt.

Auch aus der EP-A-286 350 (Fig. 3) ist ein System mit den im Oberbegriff angeführten Merkmalen bekannt.

An jedem Ende einer Lichtwellenleiterstrecke hat dieses bekannte System einen optischen Sender (Laser). Die von jedem der optischen Sender in den Lichtwellenleiter eingestrahlten optischen Signale sind nur in den beiden Moden LP01 und LP11 über den Lichtwellenleiter übertragbar.

Eine in der Nähe des ersten optischen Senders (31 in der Endstelle 30′) befindliche Modenkopplungsvorrichtung (34′) koppelt von den von dem ersten optischen Sender gesendeten Signalen die im LP11-Modus vorliegenden Signalanteile aus, so daß die weitere optische Übertragung nur im LP01-Modus erfolgt. In der von dem ersten Sender entfernten Gegenstelle (30) befindet sich eine zweite Modenkopplungsvorrichtung (34), die die Eigenschaft hat, optische Signale, die im LP01-Modus vorliegen, aus dem Lichtwellenleiter auszukoppeln, indem sie den LP01-Modus in einen zu einem ersten optischen Empfänger (32 in der Endstelle 30) abzustrahlenden Modus umwandelt.

Von den von dem zweiten optischen Sender (31 in der Endstelle 30) in Gegenrichtung gesendeten Signalen koppelt die zweite Modenkopplungsvorrichtung (34), die sich in seiner Nähe befindet, die im LP01-Modus vorliegenden Signalanteile aus, so daß die weitere optische Übertragung nur im LP11-Modus erfolgt. Diesen koppelt schließlich die erste Modenkopplungsvorrichtung (34′) aus dem Lichtwellenleiter aus, indem sie ihn in einen zum einen zweiten optischen Empfänger (32 in der Endstelle 30) abzustrahlenden Modus umwandelt.

Auch dieses bekannte System erfordert einen erheblichen Kostenaufwand.

Aufgabe der vorliegenden Erfindung ist es, ein optisches Nachrichtenübertragungssystem der eingangs genannten Art, insbesondere für den Teilnehmeranschlußbereich, zu schaffen, das einfacher und kostengünstiger ausgeführt als die bekannten Systeme ist.

Zur Lösung dieser Aufgabe sind bei einem optischen Nachrichtenübertragungssystem die im Anspruch 1 angegebenen Merkmale vorgesehen.

Das erfindungsgemäße System kann optische Sender in Form von Halbleiterlasern ohne Selektion, also mehrmodige Halbleiterlaser verwenden, die in Massen kostengünstig herstellbar sind. Ebenso einfach wie kostengünstig sind die erfindungsgemäß verwendeten Ein- und Auskoppelvorrichtungen.

Gemäß einem bevorzugten Ausführungsbeispiel vorliegender Erfindung, wie es durch die Merkmale des Anspruchs 2 gegeben ist, wird ein optisches Bauteil verwendet, das zur Zeit am einfachsten und kostengünstigsten herstellbar ist und das in einfacher Weise an die Struktur des Lichtwellenleiters und die Wellenlänge des optischen Signals angepaßt werden kann.

Um bei einem derartigen System das Signal/Rausch-Verhältnis zu verbessern, sind in weiterer Ausgestaltung der Erfindung die Merkmale des Anspruchs 3 vorgesehen.

Mit den Merkmalen des Anspruchs 4 oder des Anspruchs 5 ist erreicht, daß das Nahnebensprechen verhindert ist. Außerdem kann die Trennung der verschiedenen Hochfrequenzbänder durch Massenware darstellende und damit billige handesübliche Filter erfolgen.

Die Erfindung wird nun anhand der Zeichnung und eines Ausführungsbeispieles näher erläutert. Es zeigen:
- Fig. 1: ein bidirektionales optisches Nachrichtenübertragungssystem gemäß einem bevorzugten Ausführungsbeispiel vorliegender Erfindung und
- Fig. 2A und B: die Ein- bzw. Auskopplung des Grundmodus LP01 in den bzw. aus dem Lichtwellenleiter.

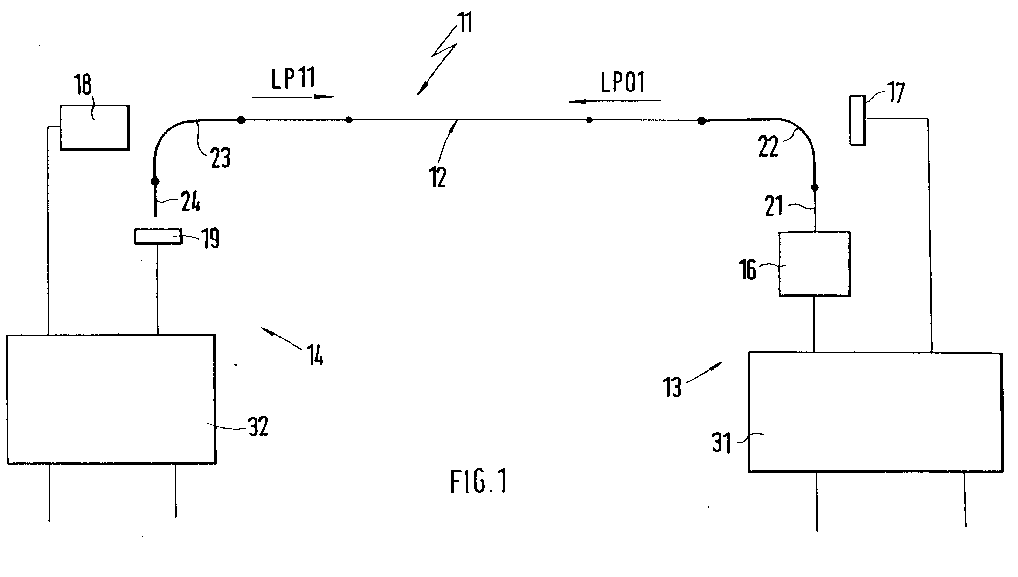

Das in Fig. 1 gemäß einem bevorzugten Ausführungsbeispiel dargestellte optische Nachrichtenübertragungssystem 11, das insbesondere für den Teilnehmeranschlußbereich vorteilhaft verwendet werden kann, besitzt als Übertragungsmedium einen Lichtwellenleiter 12, der als sogenannter 1300nm-Monomode-Lichtwellenleiter ausgebildet ist. Jeder Anschlußbereich 13, 14, beispielsweise in Form einer Teilnehmerstation und/oder einer Vermittlungsstation, besitzt einen optischen Sender 16 bzw. 18 in Form eines longitudinal mehrmodigen Halbleiterlasers bzw. CD-Lasers und einen optischen Empfänger 19 bzw. 17 in Form einer Halbleiter-Fotodiode bzw. PIN-Diode. Die gleichen optischen Sender 16, 18 und die gleichen optischen Empfänger 17, 19 haben eine Betriebswellenlänge im Bereich von 800 nm, die somit deutlich unterhalb der Grenzwellenlänge von z.B. 1280 nm des für eine Übertragung im Bereich 1300 nm bis 1600 nm vorgesehenen Standard-Monomode-Lichtwellenleiters 12 ist.

Der optische Sender 16 des einen Anschlußbereichs 13 ist über eine Einkoppelfaser 21 mit einem Auskoppelbauteil 22 in Form eines Krümmers optisch verbunden, welcher seinerseits mit dem einen Ende einer Strecke des Monomode-Lichtwellenleiters 12 verbunden ist. Das andere Ende dieser oder einer anderen Strecke des Monomode-Lichtwellenleiters 12 ist mit einem Einkoppelbauteil 23 in Form eines Krümmers verbunden, der mit einer Auskoppelfaser 24 optisch verbunden ist, welcher der optische Empfänger 19 des anderen Anschlußbereichs 14 gegenüberliegt. Die in Fig. 1 vorhandenen Punkte stellen beispielsweise Spleißverbindungen zwischen den einzelnen optischen Bauteilen dar.

Der optische Sender 18 des anderen Anschlußbereichs 14 ist derart angeordnet, daß seine optische Signale aussendende Seite dem Einkoppel-Krümmer 23 zugewandt ist. Entsprechend ist dem Auskoppel-Krümmer 22 die optische Signale empfangende Seite des optischen Empfängers 17 des einen Anschlußbereichs 13 zugewandt angeordnet.

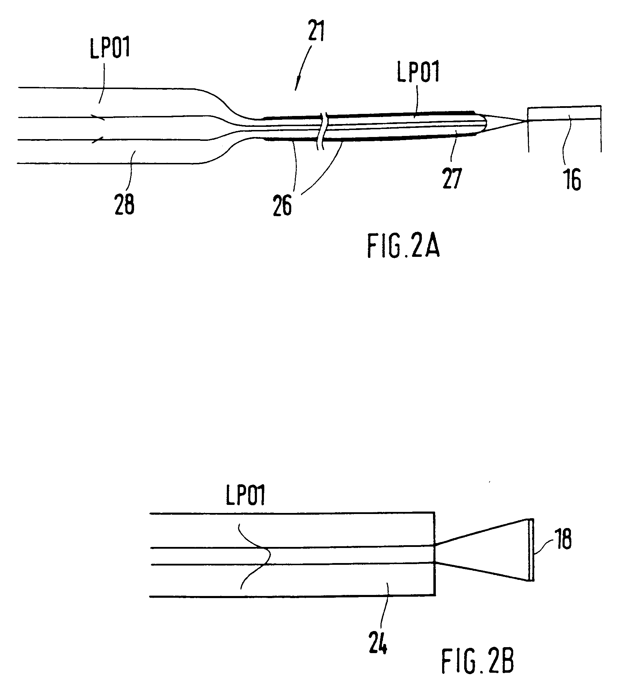

Gemäß Fig. 2A ist die Einkoppelfaser 21 des einen Anschlußbereichs 13 derart ausgebildet und mit dem optischen Sender in Form des mehrmodigen CD-Lasers 16 derart gekoppelt, daß die Einkoppelfaser 21 nur den LP01-Modus des optischen Signals führen und ausbreiten kann. Dazu ist die Einkoppelfaser 21 an ihrem dem optischen Sender 16 zugewandten Ende 27 verjüngt und umfangsseitig mit einer absorbierenden Schicht 26 versehen. Erst nach einem bestimmten Längenabstand erfolgt ein Übergang von diesem verjüngten Längenbereich 27 auf einen normalen 1300nm-Faser-Bereich 28 der Einkoppelfaser 21. Das Auskoppeln des Signals im LP01-Modus aus der Auskoppelfaser 24 auf den optischen Empfänger 18 im anderen Anschlußbereich 14 erfolgt durch einfache Abstrahlung, wie dies aus Fig. 2B hervorgeht.

Das Auskoppelbauteil 22 und das Einkoppelbauteil 23 sind, wie erwähnt, Krümmer mit einem bestimmten Radius, der im wesentlichen in Abhängigkeit von der Struktur des Lichtwellenleiters 12 und von der Wellenlänge des geführten Signales derart gewählt ist, daß Signale im LP11-Modus durch Abstrahlen ausgekoppelt bzw. eingekoppelt werden können. Dieses Verhalten derartiger Krümmer 22, 23 ist in ELECTRONIC LETTERS 21 (1985) p 1042 beschrieben. Dies bedeutet, daß von den Signalen des longitudinal mehrmodigen optischen Senders 18 im anderen Anschlußbereich 14 nur die Signale im LP11-Modus vom Einkoppel-Krümmer 23 aufgenommen, d.h. eingekoppelt werden. Ebenso wie die Signale im Grundmodus LP01 breiten sich auf dem Lichtwellenleiter 12 in Gegenrichtung Signale mit dem nächst höheren Modus LP11 aus, wobei die letzteren aufgrund der erwähnten Ausgestaltung des Auskoppel-Krümmers 22 in diesem ausgekoppelt und auf den optischen Empfänger 17 im einen Anschlußbereich 13 abgestrahlt werden.

Zur Verbesserung des Signal/Rausch-Verhältnisses kann in nicht dargestellter Weise im Bereich vor dem optischen Sender 16, also zwischen Auskoppelbauteil 22 und Einkoppelfaser 21 und im Bereich vor dem optischen Empfänger 19, also zwischen dem Einkoppelbauteil 23 und der Auskoppelfaser 24, ein Modenfilter eingesetzt werden, das nur den LP01-Modus durchläßt. Die beiden longitudinal mehrmodigen CD-Laser 16, 18 sind bis zu einem gewissen Grade rückwirkungsunempfindlich, so daß geringe Auskopplungen von Signalen im LP01-Modus vom Einkoppelbauteil 23 auf den optischen Sender 18 und geringe Einkopplungen von Signalen im LP11-Modus vom optischen Sender 16 und auf der weiteren Faserstrecke 12, welche Einkopplungen ebenfalls auf den optischen Sender 18 laufen, ohne Wirkungen bleiben. Entsprechendes gilt für den optischen Sender 16.

Beim dargestellten Ausführungsbeispiel werden Signale eines Hin- und Rückkanals des analog oder digital arbeitenden optischen Breitband-Nachrichtensystems in verschiedenen Hochfrequenzbändern gesendet. Beispielsweise wird in einem analgogen System für den Hinkanal ein Träger in der Größe von 38,7 MHz und für den Rückkanal ein Träger von 225 kHz verwendet. Ebenso kann z.B. in dem dargestellten Ausführungsbeispiel der Hinkanal einen Träger bei etwa 1 GHz besitzen, die beide digital moduliert sind. Die Modulationsfrequenz muß deutlich geringer sein als die Trägerfrequenz.

Beide Anschlußbereiche 13, 14 sind jeweils mit einer Elektronikeinheit 31, 32 versehen, die entsprechend obigem Beispiel, Filter für 38,7 MHz und 225 kHz bzw. für 1 GHz und 3 GHz enthalten, so daß Rückwirkungen der unterschiedlichen Signale mit unterschiedlichen Trägern minimalisiert werden. Statt jeweils eines Trägers in einer Richtung können auch mehrere Träger verwendet werden. In diesem Fall würden durchstimmbare Filter eingesetzt. Dies hätte den Vorteil einer Mehrkanalübertragung.

## Patentansprüche

1. Optisches Nachrichtenübertragungssystem, insbesondere für den Teilnehmeranschlußbereich, mit einem bidirektional betreibbaren Lichtwellenleiter, in dem in einem Wellenlängenbereich, z.B. im 800 nm Wellenlängenbereich, der deutlich unterhalb seiner Grenzwellenlänge, z.B. 1280 nm, liegt, nur der Grundmodus LP01 und der nächst höhere Modus LP11 ausbreitungsfähig sind, mit mindestens zwei optischen Sendern in Form von Halbleiterlasern und mit mindestens zwei Empfängern in Form von Halbleiter-Fotodioden, deren Betriebswellenlänge in dem genannten unterhalb der Grenzwellenlänge liegenden Wellenlängenbereich liegt, wobei die optischen Sender und die optischen Empfänger so an den Lichtwellenleiter angekoppelt sind, daß zwei optische Signale bidirektional mit unterschiedlichen Moden LP01, LP11 übertragen werden,
**dadurch gekennzeichnet,**
daß der eine optische Sender (16) Signale im LP01-Modus in den Lichtwellenleiter (12) einkoppelt und der eine optische Empfänger (19) diese Signale vom Ende des Lichtwellenleiters 812) empfängt und daß der andere optische Sender (18) und der andere optische Empfänger jeweils einem im Zuge des Lichtwellenleiters (12) befindlichen Krümmer (23, 24) zugewandt ist, der dazu dient, Signale im LP11-Modus vom anderen optischen Sender (18) in den Lichtwellenleiter (12) einzukoppeln bzw. aus dem Lichtwellenleiter (12) zum anderen optischen Empfänger (17) hin auszukoppeln.

2. System nach Anspruch 1, dadurch gekennzeichnet, daß jeder der Krümmer (23, 22) einen Radius hat, der insbesondere abhängig von der Struktur des Lichtwellenleiters und der Wellenlänge des optischen Signals so gewählt ist, daß nur Signale im LP11-Modus ein- bzw. auskoppelbar sind, während Signale im LP01-Modus ungestört hindurchgeführt werden.

3. System nach Anspruch 1 oder 2, dadurch gekennzeichnet, daß zwischen dem einen optischen Sender (16) und dem zum Einkoppeln von Signalen im LP11-Modus dienenden Krümmer (22) und zwischen dem einen optischen Empfänger (19) und dem zum Auskoppeln von Signalen im LP11-Modus dienenden Krümmer (23) ein Modenfilter vorhanden ist, das nur Signale im LP01-Modus durchläßt.

4. System nach einem der Ansprüche 1 bis 3, dadurch gekennzeichnet, daß dem optischen Träger ein hochfrequenter Träger aufmoduliert wird, der analog oder digital moduliert ist.

5. System nach Anspruch 4, dadurch gekennzeichnet, daß die bidirektionale Signalübertragung in verschiedenen Hochfrequenzbändern erfolgt.

## Claims

1. Optical communication system, in particular for the subscriber connection area, comprising a bidirectionally operable optical waveguide in which only the fundamental mode LP01 and the next higher-order mode LP11 can propagate in a wavelength range, for example in the 800 nm wavelength range, which is markedly below the cutoff wavelength of the optical waveguide, for example 1280 nm, comprising at least two optical transmitters in the form of semiconductor lasers and at least two receivers in the form of semiconductor photodiodes whose operating wavelength is within said wavelength range situated below the cutoff wavelength, the optical transmitters and the optical receivers being coupled to the optical waveguide in such a way that two optical signals are transmitted bidirectionally in different modes LP01, LP11, characterized in that one optical transmitter (16) couples LP01-mode signals into the optical waveguide (12) and one optical receiver (19) receives said signals from the end of the optical waveguide (12) and in that the other optical transmitter (18) and the other optical receiver are each adjacent to a bend (23, 24) which is situated in the path of the optical waveguide (12) and which serves to couple LP11-mode signals from the other optical transmitter (18) into the optical waveguide (12) or out of the optical waveguide (12) to the other optical receiver (17).

2. System according to Claim 1, characterized in that each of the bends (23, 22) has a radius which is chosen, in particular, as a function of the structure of the optical waveguide and of the wavelength of the optical signal so that only LP11-mode signals can be coupled in or out, while LP01-mode signals are transmitted undisturbed.

3. System according to Claim 1 or 2, characterized in that a mode filter which transmits only LP01-mode signals is present between one optical transmitter (16) and the bend (22) which serves to couple in LP11-mode signals and between one optical receiver (19) and the bend (23) which serves to couple out LP11-mode signals.

4. System according to one of Claims 1 to 3, characterized in that the optical carrier is modulated with a high-frequency carrier which is analog- or digital-modulated.

5. System according to Claim 4, characterized in that the bidirectional signal transmission takes place in various high-frequency bands.

## Revendications

1. Système optique de transmission de l'information, en particulier au voisinage du raccordement d'un abonné, comportant un guide d'ondes qui peut être exploité en bidirectionnel et sur lequel ne peuvent se propager, sur une plage de longueur d'onde, par exemple sur la plage de longueur d'onde 800nm, qui se situe nettement en dessous de sa longueur d'onde de coupure, par exemple 1280nm, que le mode de base LP01 et le mode supérieur LP11, comportant aussi au moins deux émetteurs optiques sous forme de lasers à semiconducteur et au moins deux récepteurs sous forme de photodiodes à semiconducteur, dont la longueur d'onde de travail se situe sur la plage de longueur d'onde mentionnée, inférieure à la longueur d'onde de coupure, système dans lequel les émetteurs optiques et les récepteurs optiques sont couplés au guide d'ondes de façon telle que deux signaux optiques sont transmis en bidirectionnel suivant des modes LP01, LP11 différents,
système caractérisé
par le fait que le premier émetteur optique (16) fait entrer dans le guide d'ondes (12) des signaux en mode LP01 et que le premier récepteur optique (9) reçoit ses signaux de la part de l'extrémité du guide d'ondes (12) et par le fait que l'autre émetteur optique (18) et l'autre récepteur optique sont chacun orientés vers un coude (23, 24) qui se trouve à un endroit du guide d'ondes (12) et qui sert à faire entrer dans le guide d'ondes (12) des signaux en mode LP11 provenant de l'autre émetteur optique (18) ou à les faire sortir hors du guide d'ondes (12) pour aller sur l'autre récepteur optique (17).

2. Système selon la revendication 1, caractérisé par le fait que chacun des coudes (23, 22) présente un rayon que l'on choisit en particulier en fonction de la structure du guide d'ondes et de la longueur d'onde du signal optique de façon à ne pouvoir faire entrer ou sortir que les signaux en mode LP11 tandis que les signaux en mode LP01 passent sans incident.

3. Système selon la revendication 1 ou 2, caractérisé par le fait qu'entre le premier émetteur optique (16) et le coude (22) qui sert à faire entrer les signaux en mode LP11 ainsi qu'entre le premier récepteur optique (19) et le coude (23) qui sert à faire sortir les signaux en mode LP11 se trouve un filtre de modes qui ne laisse passer que les signaux en mode LP01.

4. Système selon l'une des revendications 1 à 3, caractérisé par le fait que sur la porteuse optique on module une porteuse haute fréquence qui est modulée par voie analogique ou numérique.

5. Système selon la revendication 4, caractérisé par le fait que la transmission bidirectionnelle des signaux se fait sur différentes bandes haute fréquence.
